# EUROPÄISCHE PATENTSCHRIFT

(11) **EP 2 040 880 B1**
(45) Veröffentlichungstag und Bekanntmachung des Hinweises auf die Patenterteilung: **09.03.2016**
(21) Anmeldenummer: 07786051.8
(22) Anmeldetag: 13.07.2007
(51) Int. Cl.: B24B 19/26, B21D 53/02, F01N 1/08

(54) **VERFAHREN ZUR ERZEUGUNG VON ÖFFNUNGEN IN EINER METALLFOLIE**
METHOD FOR THE PRODUCTION OF OPENINGS IN A METAL FOIL
PROCÉDÉ DE RÉALISATION D'OUVERTURES DANS UNE FEUILLE DE MÉTAL

(30) Priorität: 14.07.2006 DE 102006032861
(43) Veröffentlichungstag der Anmeldung: 01.04.2009
(73) Patentinhaber: Continental Automotive GmbH, 30165 Hannover (DE)
(72) Erfinder: WIERES, Ludwig, 51491 Overath (DE); HODGSON, Jan, 53840 Troisdorf (DE); KURTH, Ferdi, 53894 Mechernich (DE); VOIT, Michael, 51375 Leverkusen (DE)
(86) Internationale Anmeldenummer: PCT/EP2007/006224
(87) Internationale Veröffentlichungsnummer: WO 2008/006600

(56) Entgegenhaltungen:
- WO-A1-2004/072446
- GB-A- 1 019 359
- US-A- 5 085 268

## Beschreibung

Die vorliegende Erfindung betrifft ein Verfahren zur Erzeugung von Öffnungen in einer Metallfolie. Solche Metallfolien werden insbesondere zum Aufbau von Abgasbehandlungseinheiten eingesetzt, die beispielsweise zur Reduzierung der Schadstoffe mobiler Verbrennungskraftmaschinen bei Kraftfahrzeugen dienen.

Bei der Herstellung solcher Metallfolien ist bekannt, diese nach Art eines Wabenkörpers anzuordnen, wobei eine Vielzahl von für ein Abgas durchströmbaren Kanälen gebildet ist. Die Metallfolie dient dabei als Begrenzung der Kanäle. Hierzu können glatte und/oder strukturierte Metallfolien eingesetzt werden, wobei sich aufgrund der Struktur bzw. der Anordnung der Metallfolien eine bestimmte Gestalt der Kanäle ausbildet.

Darüber hinaus ist auch bekannt, solche Metallfolien mit Öffnungen zu versehen, beispielsweise um einen Austausch von Abgasströmungen in benachbarten Strömungskanälen zu gewährleisten und/oder um weitere Komponenten in dem Wabenkörper zu platzieren (z. B. Messfühler, elektrische Anschlüsse, Strömungsleitbleche und dergleichen).

Die Herstellung solcher Öffnungen bei gewellten Metallfolien erfolgt derzeit regelmäßig so, dass die Metallfolien zunächst in einem Stanzverfahren geschlitzt werden, wobei nachfolgend entsprechende Wellwalzen die Struktur- bzw. Formgebung der Metallfolie übernehmen. Gerade im Hinblick auf die automatisierte Serienfertigung solcher Metallfolien für Abgasbehandlungseinheiten hat sich das Stanzverfahren weitgehend etabliert.

Neuere Entwicklungen bei der Gestaltung solcher Abgasbehandlungseinheiten erfordern, dass die Lage der Öffnungen mit Bezug auf die Struktur der Metallfolie besonders präzise abgestimmt ist. Insbesondere werden dazu geregelte Prozesse durchgerührt, um eine exakte Positionierung einer solchen Öffnung beispielsweise auf einem Wellenberg oder in einem Wellental zu gewährleisten. Immer wieder auftretende Deformationen der Metallfolie, Materialinhomogenitäten und dergleichen führen dazu, dass dieser Prozess nur mit hohem technischem Aufwand stabil ausgeführt werden kann.

In der WO 2004/072446 A1 wird ein Verfahren zur Herstellung von mehrfach strukturierten Blechfolien vorgeschlagen. Es werden Trennkanten in eine Blechfolie gestanzt. Die Blechfolie erhält eine Primärstruktur mit einer ersten Primärstruktur-Weite. Die Primärstruktur wird mit einer Sekundärstruktur überlagert. Nachfolgend wird die erste Primärstruktur-Weite zu einer zweiten Primärstruktur-Weite reduziert.

In der GB-A-1019359 wird die Herstellung eines Bleches für Tragflächen vorgeschlagen. Dabei werden in ein Blech Vertiefungen eingeprägt, bevor das Blech an der Tragfläche angebracht wird. Weiter wird dort vorgeschlagen, mittels einer Schleifvorrichtung die Vertiefungen zu öffnen. Auf diese Weise soll eine Grenzschichtabsaugung erreicht werden. Dieses Herstellungsverfahren für Tragflächen eignet sich allerdings nicht für die Serienfestigung von dünnen Metallfolien, wie sie in Abgasbehandlungsvorrichtungen vorgesehen sind.

In der US-A-5085268 ist eine metallischer Wärmetauscher sowie ein Verfahren zu deren Herstellung beschrieben, wobei Vertiefungen in eine Blechbahn eingebracht werden, die an Rippen einer weiteren Blechbahn angepasst sind, so dass diese formschlüssig miteinander verbunden aufgewickelt werden können.

Dokument WO 2004/072446 A offenbart ein Verfahren zur Erzeugung von Öffnungen in eine Metallfolie umfassend zumindest die folgenden Schritte:
a) Bereitstellen einer ebenen Metallfolie,
b) Erzeugen mindestens einer Krümmung in die Metallfolie,
c) Erzeugen zumindest einer Öffnung im Bereich der mindestens einen Krümmung, wobei die Metallfolie während dessen eine Vorschubbewegung ausführt. Aufgabe
der vorliegenden Erfindung ist, die mit Bezug auf den Stand der Technik geschilderten technischen Probleme zumindest teilweise zu lösen. Insbesondere soll ein Verfahren zur Erzeugung von Öffnungen angegeben werden, das schnell und kostengünstig und mit hoher Präzision durchgeführt werden kann, so dass sich dieses Verfahren insbesondere für den Einsatz in einer Serienfertigung eignet. Darüber hinaus soll auch ein Verfahren zur Herstellung eines Wabenkörpers angegeben werden, das ebenfalls den vorstehend genannten Anforderungen zumindest teilweise genügt. Darüber hinaus sollen auch besonders effizient herstellbare Produkte angegeben werden.

Diese Aufgaben werden gelöst mit einem Verfahren gemäß den Merkmalen des Patentanspruchs 1. Weitere vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Darüber hinaus offenbart die Beschreibung, die einige Merkmale aus den Patentansprüchen im Detail erläutert bzw. spezifiziert, weitere vorteilhafte Ausgestaltungen der Erfindung.

Erfindungsgemäß umfasst das Verfahren nach Anspruch 1 zur Erzeugung von Öffnungen in einer Metallfolie die folgenden Schritte:
a) Bereitstellen einer ebenen Metallfolie,
b) Erzeugen mindestens einer Krümmung in die Metallfolie,
c) Erzeugen zumindest einer Öffnung im Bereich der mindestens einen Krümmung mittels eines spanenden Fertigungsverfahrens.

Im Hinblick auf Schritt a) ist anzumerken, dass mit einer "ebenen" Metallfolie im Wesentlichen eine "nicht-strukturierte" Metallfolie gemeint ist. Demnach ist die Metallfolie, die regelmäßig auf einem so genannten Coil aufgewickelt ist, normalerweise lediglich abzuwickeln und der Bearbeitungsstation zuzuführen. Dabei betrifft "nicht-strukturiert" eher eine makroskopische Sichtweise, so dass der Querschnitt der Metallfolie im Wesentlichen eine (noch) nicht (insbesondere periodisch) gekrümmte Linie ist.

Bezüglich Schritt b) ist anzumerken, dass während diesem Verfahrensschritt grundsätzlich auch mehrere Krümmungen gleichzeitig bzw. in kurzer Zeitfolge nacheinander eingebracht werden können. Dabei ist auch möglich, dass es sich bei dieser Krümmung um eine vorübergehende Verformung handelt, die beispielsweise nur für den Zeitraum des Schrittes c) realisiert ist. Bevorzugt ist jedoch die Ausgestaltung, wobei die mindestens eine Krümmung permanent durch Formgebung in die Metallfolie eingebracht ist, so dass diese nun eine Struktur aufweist.

Schritt c) macht nun deutlich, von dem klassischen Stanz-Verfahren abgerückt wird. Hier werden die Öffnungen nunmehr mit einem spanenden Fertigungsverfahren eingebracht. Unter einem "spanenden" Fertigungsverfahren wird ein Fertigungsverfahren verstanden, bei dem die Erzeugung der mindestens einen Öffnung, insbesondere (nahezu) ausschließlich, unter Bildung von Spänen einhergeht. Beispiele für spanende Fertigungsverfahren sind insbesondere Fräsen, Bohren, Schleifen und dergleichen.

Mit Hilfe der Krümmung wird dabei erreicht, dass ein entsprechendes Werkzeug zur Durchführung des spanenden Fertigungsverfahrens lokal in die Metallfolie in Eingriff gebracht werden kann, ohne großflächige Bereiche der Metallfolie zu kontaktieren. Dabei ermöglicht die Bereitstellung der Krümmung selbst eine sehr präzise Lokalisierung der zu tätigenden Bearbeitung. Bei dem Einsatz spanender Fertigungsverfahren können hohe Durchsatzraten erreicht werden, so dass diese besonders kostengünstig im Rahmen einer Serienfertigung zum Einsatz gelangen können.

Dabei umfasst Schritt c) ein abrasives Abtragen mittels einem der folgenden Werkzeuge mit undefinierter Schneide:
- Schleifscheibe
- Schleifdraht.

Bei solchen Werkzeugen mit undefinierter Schneide erfolgt der Materialabtrag dadurch, dass (mehr oder weniger) regellos geformte Körner aus Hartstoffen mit der Metallfolie in Eingriff gebracht werden, mit denen eine spanende Bearbeitung erfolgt. Diese Fertigungsverfahren mit geometrisch unbestimmter Schneide sind regelmäßig Feinbearbeitungsverfahren, mit denen sich sehr hohe Oberflächengüten und Maßgenauigkeiten erzielen lassen. Bei einer "Schleifscheibe" handelt es sich regelmäßig um ein scheibenförmiges Werkzeug, das rotiert wird. Auf der Oberfläche der Schleifscheibe sind zumindest teilweise entsprechende Schleifkörner angebracht, die die spanende Bearbeitung durchführen. Ein anderes Werkzeug, welches hier zur Durchführung eines solchen Verfahrens bevorzugt ist, ist der so genannte "Schleifdraht". Dieser Schleifdraht umfasst einen im Wesentlichen drahtförmigen Grundkörper, auf dessen Oberfläche wiederum (mehr oder weniger) regellos geformte Körner aus Hartstoffen angebracht sind. Durch eine (insbesondere translatorische) Relativbewegung zwischen Schleifdraht und Metallfolie wird bei Kontakt des Schleifdrahts mit der Metallfolie eine spanende Bearbeitung durchgeführt, mit der sich Öffnungen im Bereich der mindestens einen Krümmung der Metallfolie präzise einbringen lassen.

Des Weiteren ist darauf hinzuweisen, dass die Metallfolie während Schritt c) eine Vorschubbewegung ausführt. Damit ist insbesondere gemeint, dass die Metallfolie die Schritte a) bis c) kontinuierlich, und insbesondere mit einem gleich bleibenden Vorschub, durchführt, so dass ein kontinuierlicher Prozess gegeben ist. Die Werkzeuge zur Durchführung der spanenden Fertigungsverfahren können zudem, insbesondere zeitweise, relativ zu der Metallfolie bewegt werden.

Bevorzugt ist eine Verfahrensvariante, bei der Schritt b) das Erzeugen einer permanenten Struktur mit einer Vielzahl von Krümmungen umfasst. Hierbei sind insbesondere gewellte oder ähnliche Strukturen gemeint, wobei der Verlauf der Extrema der Struktur bevorzugt im Wesentlichen senkrecht bzw. schräg zur Vorschubbewegung orientiert ist. So kann eine permanente Struktur beispielsweise durch eine Walzumformung mit profilierten Walzrädern hergestellt werden. Mit "permanent" ist insbesondere gemeint, dass die Formgebung der Struktur nicht nur im elastischen Bereich der Metallfolie liegt. Die Struktur bietet dabei in den Extrema eine Vielzahl von Krümmungen, die zum Eingriff mit einem Werkzeug zur Durchführung eines spanenden Fertigungsverfahrens geeignet sind.

Weiter wird als vorteilhaft erachtet, dass die Mittel zur Erzeugung der mindestens einen Krümmung auch als Führung der Metallfolie während Schritt c) dienen. Damit ist insbesondere gemeint, dass die Metallfolie in einem Werkzeug zunächst mit einer Struktur versehen wird, wobei beim Eingriff des Werkzeugs zur Durchführung des spanenden Fertigungsverfahrens einseitig in die strukturierte Metallfolie eindringt und auf der gegenüber liegenden Seite das Werkzeug zur Formgebung die Struktur der Metallfolie stabilisiert.

Schließlich wird auch vorgeschlagen, dass ein Schritt d) durchgeführt wird, bei dem wenigstens eine Kante der zumindest einen Öffnung geglättet wird. Mit "Kante" ist insbesondere der Grenzbereich der Öffnung gemeint. Eine Glättung dieser Kante, beispielsweise um dort befindliche Grate zu entfernen, kann durch Bürsten, Waschen oder ähnliche Verfahren bewirkt werden.

Des Weiteren wird hier ein Verfahren zur Herstellung eines Wabenkörpers umfassend wenigstens eine gewellte Metallfolie und ein flaches Metallband vorgeschlagenen, das zumindest folgende Schritte aufweist:
A) Herstellen wenigstens einer gewellten Metallfolie mit Öffnungen nach einem der Ansprüche 1 bis 4;
B) Anordnen der wenigstens einen gewellten Metallfolie mit wenigstens einem flachen Metallband zu wenigstens einem Stapel;
C) Winden des wenigstens einen Stapels;
D) Einfügen des wenigstens einen Stapels in ein Gehäuse;
E) Fügen zumindest von Metallfolie und Metallband miteinander oder zumindest von Metallfolie oder Metallband mit dem Gehäuse.

Der Wabenkörper weist dabei regelmäßig eine Vielzahl von benachbart zueinander angeordneten, im Wesentlichen parallel zueinander verlaufenden, Kanälen auf, die für ein Fluid durchströmbar sind. Dazu werden vorteilhafter Weise eine gewellte Metallfolie und ein flaches Metallband (bzw. mehrere solcher Metallfolien bzw. solcher Metallbänder) wechselseitig zueinander angeordnet, so dass sie jeweils einen Teil einer Kanalwand bilden. Die wechselweise angeordnete Metallfolie bzw. Metallbänder können zueinander ausgerichtet und zu einem Stapel angeordnet werden. Vorzugsweise werden dann mindestens zwei oder drei solcher Stapel miteinander verwunden bzw. verbogen und anschließend so in ein Gehäuse eingefügt, dass vorteilhafter Weise alle Enden der Metallfolien bzw. Metallbänder an der Innenseite des Gehäuses zur Anlage kommen. Damit die Komponenten ihre Relativlage zueinander nicht mehr verändern, wird auch vorgeschlagen, dass zumindest die Metallfolien und die Metallbänder zueinander fixiert sind, wobei vorteilhafter Weise die Metallfolien und/oder die Metallbänder auch mit dem Gehäuse verbunden sind. Im Hinblick auf das Fügeverfahren wird insbesondere das Hartlöten oder ein ähnliches Verfahren (z.B. Erzeugen von Diffusionsanbindungen, Schweißen,...) vorgeschlagen.

Bezüglich Schritt B) wird zudem als vorteilhaft erachtet, dass vor Schritt B) bei dem wenigstens einen flachen Metallband zumindest ein lokaler Vorsprung erzeugt wird, der zumindest während Schritt B) mit wenigstens einer Öffnung der wenigstens einen gewellten Metallfolie zusammenwirkt. Das heißt mit anderen Worten insbesondere, dass die wenigstens eine Öffnung in der gewellten Metallfolie zur Fixierung während der Bildung des Stapelns und damit zu einer verwechslungssicheren Anordnung der gewellten Metallfolie mit dem flachen Metallband dienen und/oder während Schritt C) eine unerwünschte Relativbewegung der Metallfolie bzw. des Metallbandes bezüglich des Stapels verhindern kann. Somit stellen der lokale Vorsprung und die Öffnung eine Art Formschluss bereit, der die Relativlage der Metallbänder bzw. der Metallfolien zueinander bestimmt.

Darüber hinaus wird auch eine Abgasbehandlungseinheit vorgeschlagen, die zumindest eine Metallfolie umfasst, die mit dem hier erfindungsgemäß beschriebenen Verfahren hergestellt ist und zudem ein Vlies aus Drahtfilamenten hat, wobei Metallfolie und Vlies zusammen einen Wabenkörper mit Kanälen bilden, wobei wenigstens ein Teil der Kanäle zumindest teilweise verschlossen sind. Eine solche Abgasbehandlungseinheit findet insbesondere Einsatz als sogenannter Filter für ein Abgassystem eines Kraftfahrzeuges. Dazu werden in vorteilhafter Weise eine Mehrzahl solcher gewellter Metallfolien mit im Wesentlichen flachen Vliesen abwechselnd geschichtet und nach Art eines Wabenkörpers zusammengefügt. Die Kanäle können nun im Bereich der Kanalenden und/oder dazwischen einfach bzw. mehrfach (teilweise) verschlossen sein. Damit werden Strömungsengpässe gebildet, die eine Teilumlenkung des Abgasstromes durch das Vlies hindurch bewirken, so dass darin mitgeführte Partikel sich in den Drahtfilamenten bzw. in dem Vlies ansammeln können. Die so aufgehaltenen Partikel können anschließend (z. B. auch katalytisch unterstützt) umgesetzt werden.

Weiterhin wird eine Abgasbehandlungseinheit mit zumindest einem Wabenkörper vorgeschlagen, der nach dem hier beschriebenen Herstellungsverfahren gefertigt wurde, wobei die Metallfolie und das Metallband wenigstens teilweise mit einer Beschichtung aus der folgenden Gruppe versehen ist: Beschichtung zur Oxidation von Bestandteilen eines Abgases, Beschichtung zur Reduktion von Bestandteilen eines Abgases, Beschichtung zur Speicherung von Bestandteilen eines Abgases. Gegebenenfalls kann es auch vorteilhaft sein, Kombinationen dieser Beschichtungen vorzusehen, wobei bevorzugt voneinander abgegrenzte Zonen unterschiedlicher katalytischer Aktivität vorliegen.

Schließlich wird auch eine Abgasbehandlungseinheit als vorteilhaft erachtet, die zumindest einen Wabenkörper umfasst, der mit dem hier beschriebenen Verfahren hergestellt wurde, wobei der Wabenkörper Kanäle umfasst, die zumindest teilweise mit Strömungsumlenkungen versehen sind, die wenigstens einen Teil eines Kanalquerschnitts verschließen. Dabei sind die Strömungsumlenkungen beispielsweise in direkter Nachbarschaft der Öffnungen einer gewellten Metallfolie ausgebildet. Dabei verschließen die Strömungsumlenkungen zumindest teilweise den Querschnitt der Kanäle, so dass wiederum eine Umlenkung von Teilabgasströmen in benachbarte Kanäle bewirkt wird.

Besonders vorteilhaft ist der Einsatz wenigstens einer solchen Abgasbehandlungseinheit, wie sie vorstehend in verschiedenen Ausführungsvarianten beschrieben ist, bei einem Kraftfahrzeug.

Die Erfindung sowie das technische Umfeld werden anhand der Figuren näher erläutert. Dabei zeigen die Figuren besonders bevorzugte Ausführungsvarianten der Erfindung, auf die diese jedoch nicht beschränkt ist. Es zeigen schematisch:
- Fig. 1:: eine Prinzipskizze zur Veranschaulichung eines ersten Verfahrens zur Erzeugung von Öffnungen in einer Metallfolie,
- Fig. 2:: eine Verfahrensvariante zur Erzeugung von Öffnungen in einer gewellten Metallfolie mittels einer Schleifscheibe,

- Fig. 3:: eine Ausführungsvariante einer Metallfolie nach Durchführen eines Schrittes b) des erfindungsgemäßen Verfahrens,
- Fig. 4:: die Erzeugung mehrerer Öffnungen in einer gewellten Metallfolie,
- Fig. 5:: die Erzeugung von Strömungsumlenkungen in eine gewellte Metallfolie,
- Fig. 6:: einen Stapel Metallfolien und Metallbänder, die im Bereich der Öffnungen miteinander zusammenwirken,
- Fig. 7:: ein Detail einer gewellten Metallfolie mit einer Öffnung,
- Fig. 8:: ein Detail einer Abgasbehandlungseinheit, die als sogenannter Nebenstromfilter ausgeführt ist, und
- Fig. 9:: ein Kraftfahrzeug mit einer Abgasanlage.

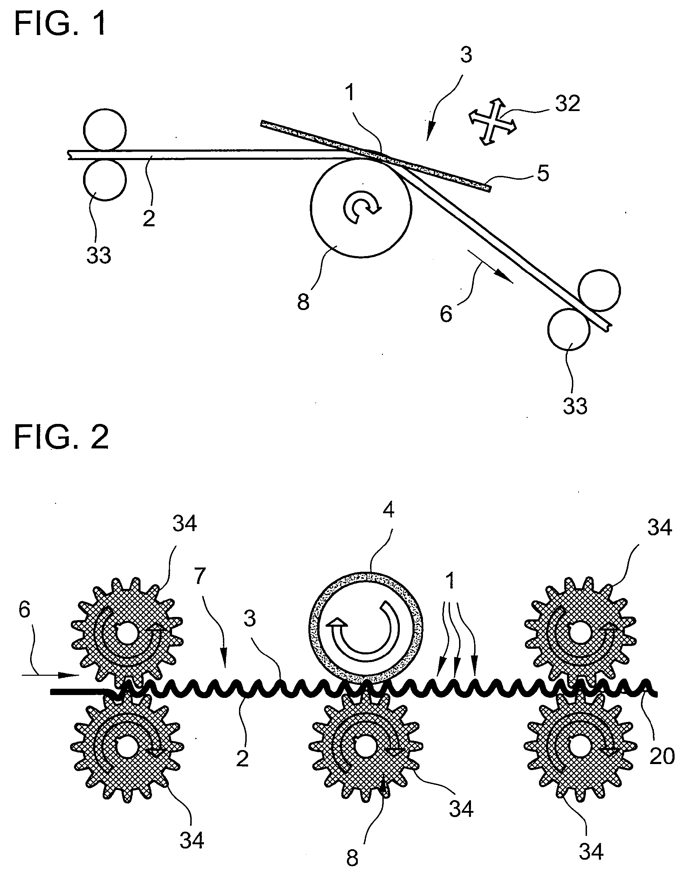

Fig. 1 veranschaulicht im Prinzip ein Verfahren zur Erzeugung von Öffnungen 1 in einer Metallfolie 2. Dazu wird die Metallfolie 2 mittels Walzen so angetrieben, dass diese eine Vorschubbewegung 6 erhält. Darüber hinaus ist hier eine Führung 8 vorgesehen, wobei eine Krümmung 3 in die Metallfolie 2 eingebracht wird. Im Bereich dieser Krümmung 3 wird nun ein Schleifdraht 5 mit der Metallfolie 2 in spanenden Kontakt gebracht, so dass die Öffnung 1 gebildet ist. Zur Herstellung derartiger Öffnungen 1 kann der Schleifdraht 5 unterschiedliche Bewegungsrichtungen 32 ausführen, um an den geeigneten Stellen eine entsprechende Öffnung 1 zu produzieren.

Fig. 2 veranschaulicht nun die Einbringung solcher Öffnungen bei einer Metallfolie 2, die mit einer permanenten Struktur 7 ausgeführt ist. Dazu wird die Metallfolie 2 in Richtung ihrer Vorschubbewegung 6 zunächst durch zwei miteinander kämmende Profilräder 34 geführt, so dass die Struktur 7 gebildet ist, die eine Vielzahl beidseitig angeordneter Krümmungen 3 umfasst. Danach schließt sich eine Bearbeitungsstation für das spanende Fertigungsverfahren an. Diese umfasst hierbei einerseits eine ebenfalls als Profilrad 34 ausgebildete Führung 8 auf, der gegenüberliegend eine Schleifscheibe 4 angeordnet ist. Durch beispielsweise entsprechende Schlitze in der Umfangsfläche des Profilrades 34 dringt das Schleifrad 4 in die Metallfolie 2 ein, so dass sich danach, hier nur auf der oben liegenden Seite der Metallfolie 2, Öffnungen 1 bilden. Die so gelochte Metallfolie 2 kann einem weiteren umformenden Bearbeitungsschritt unterzogen werden, wobei die Metallfolie 2 einem erneuten Paar Profilrädern 34 zugeführt wird, die im Bereich der Öffnungen 1 Strömungsumlenkungen 20 formen.

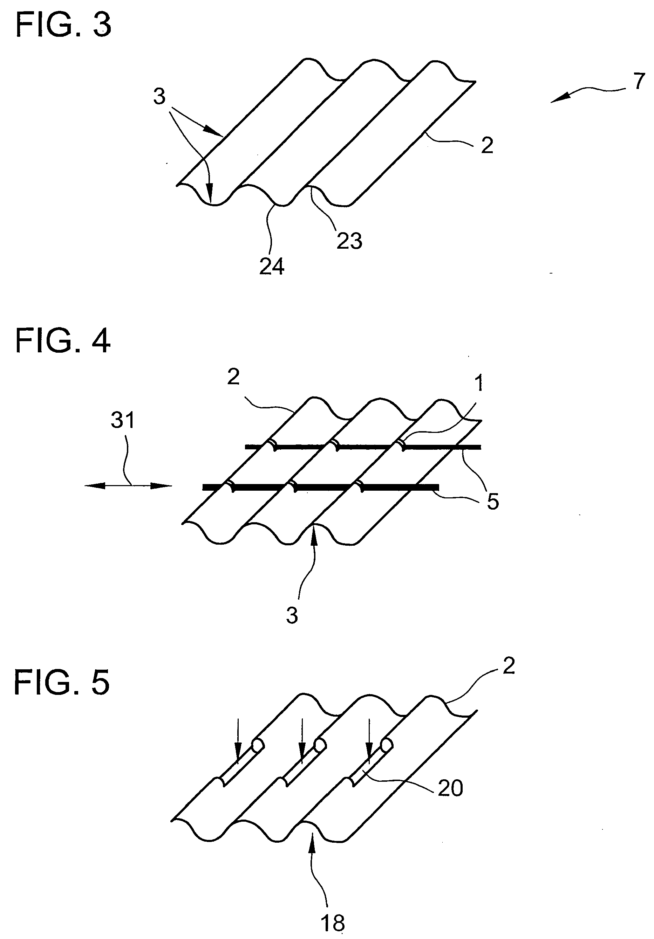

Fig. 3 zeigt in einer perspektivischen Darstellung eine gewellte Metallfolie 2 mit einer permanenten Struktur 7, die eine Vielzahl von Krümmungen 3 aufweist. Die Krümmungen 3 sind dabei im Bereich der Erhebungen 23 und Senken 24 wechselseitig ausgebildet und können jeweils mit einer Öffnung 1 versehen werden.

In Fig. 4 wird nunmehr die gleichzeitige Herstellung einer Mehrzahl von Öffnungen 1 in eine solche gewellte Metallfolie 2 veranschaulicht. Dazu wird die Metallfolie 1 mit einer Mehrzahl von hier nach Art eines Schleifdrahtes 5 ausgebildeten Werkzeugen in Kontakt gebracht, die (gleichzeitig und versetzt zueinander) spanend im Bereich der Krümmung 3 Öffnungen 1 erzeugen. Hier führt der Schleifdraht 5 eine Relativbewegung 31 bezüglich der Metallfolie 2 aus.

Eine beispielsweise gemäß Fig. 4 vorbehandelte gewellte Metallfolie 2 kann nun in einem nachgelagerten Bearbeitungsschritt zusätzlich mit Strömungsumlenkungen 20 versehen werden, indem die Bereiche der Metallfolie 2, die zwischen den soeben generierten Öffnungen 1 liegen eingedrückt werden (vgl. Fig. 5). Damit ragen diese Strömungsumlenkungen 20 der Metallfolie 2 in die später damit gebildeten Kanäle 18 hinein und bewirken einen Strömungsengpass.

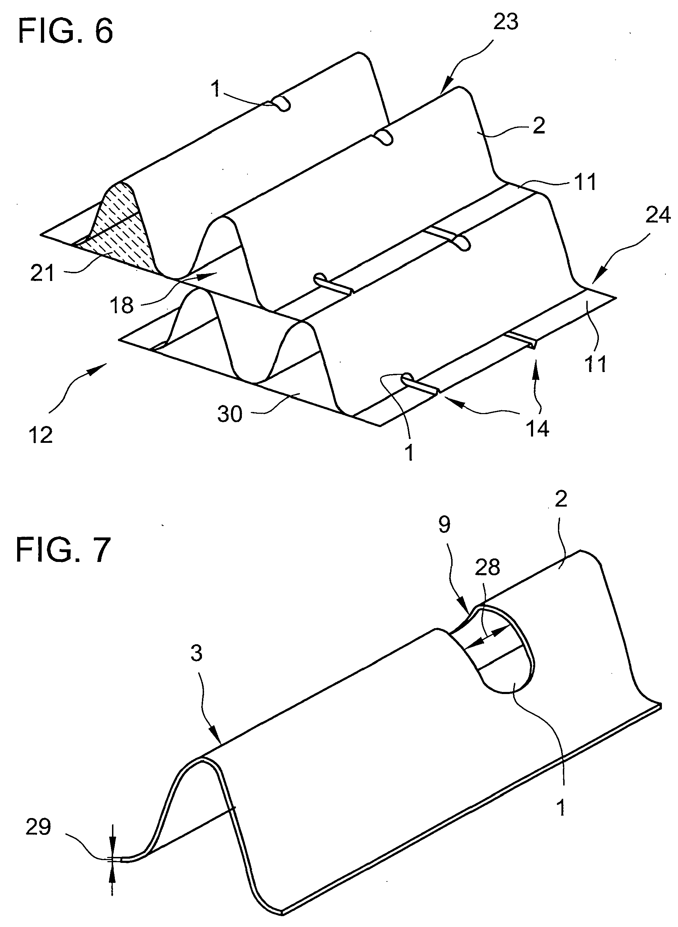

Fig. 6 zeigt einen Teil eines Stapels 12, bei dem abwechselnd ein flaches Metallband 11 und eine gewellte Metallfolie 2 gestapelt sind. Es ist zu erkennen, dass aufgrund des Kontaktes der gewellten Metallfolie 2 u mit dem flachen Metallband 11 Kanäle 18 gebildet sind, die sich im Wesentlichen parallel zueinander erstrecken und einen vorgegebenen Kanalquerschnitt 21 bilden. Bei der hier veranschaulichten Ausführungsvariante sind im Bereich der Erhebungen 23 und der Senken 24 der gewellten Metallfolie 2 Öffnungen 1 eingebracht. Diese dienen zur Aufnahme von Vorsprüngen 14, die in die flachen Metallbänder 11 eingebracht sind. Damit ist eine Art Formschluss gebildet, der ein Verschieben von Metallfolie 2 und Metallband 11 verhindert, so dass diese Komponenten insbesondere bezüglich ihrer Stirnseiten 30 nicht zueinander verschoben werden können und dieser Aufbau auch während des Windens oder während des Einfügens der Komponenten in ein Gehäuse beibehalten wird.

Fig. 7 zeigt in einem Detail wiederum eine gewellte Metallfolie 2 mit einer vorgegebenen Dicke 29, die beispielsweise im Bereich von 0,02 bis 0,08 mm liegt. Eine Öffnung 1 ist im Bereich der Krümmung 3 dargestellt. Gerade bei der Anfertigung solcher Öffnungen 1 mit einem Schleifdraht bzw. einer Schleifscheibe ist eher eine sich im Wesentlichen quer zum Verlauf der Krümmung 3 erstreckende Öffnung 1 gebildet, beispielsweise nach Art eines Schlitzes. Dabei kann die Öffnung 1 mit einer Weite 28 beispielsweise im Bereich von unter 1 mm bis hin zu mehreren Millimetern, beispielsweise 10 mm, gefertigt werden. Für den Fall, dass besonders hochwertig ausgebildete Öffnungen 1 gewünscht sind, können die Kanten 9 der Öffnungen 1 nachträglich noch von Graten und dergleichen befreit werden.

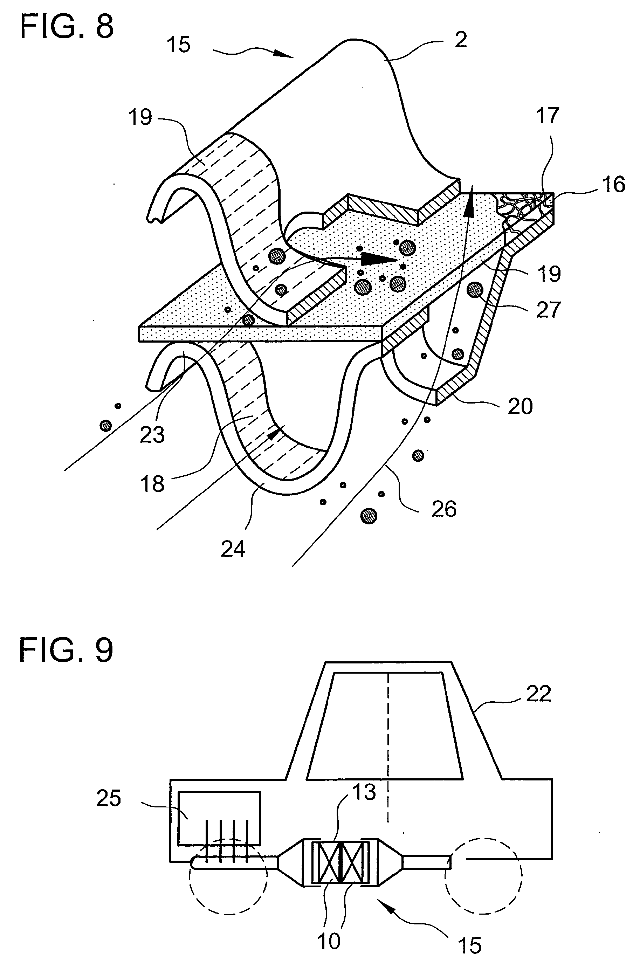

Fig. 8 zeigt ein Detail eines so genannten Nebenstromfilters, bei dem ein Abgas in Strömungsrichtung 26 durch die Abgasbehandlungseinheit 15 hindurch geführt wird. Diese Abgasbehandlungseinheit 15 ist durch wechselweise Anordnung einer gewellten Metallfolie 2 und einem Vlies 16 mit Drahtfilamenten 17 gebildet. Die gewellte Metallfolie 2 weist wiederum Erhebungen 23 und Senken 24 auf, so dass gemeinsam mit dem Vlies 16 durchströmbare Kanäle 18 gebildet sind. Das Abgas strömt nun gemeinsam mit den darin enthaltenen Partikeln 27 durch die Kanäle 18, wobei die mit der Metallfolie 2 ausgebildeten Strömungsumlenkungen 20 eine Ablenkung der Strömungsrichtung 26 zur Folge haben. Dadurch wird eine Anlagerung der Partikel 27 an dem Vlies 16 bewirkt. Zusätzlich können Beschichtungen 19 an der Metallfolie 2 und/oder dem Vlies 16 vorgesehen sein, die eine Umsetzung dieser Partikel ermöglichen.

Fig. 9 veranschaulicht nunmehr noch ein Kraftfahrzeug 22, das eine Verbrennungskraftmaschine 25 aufweist. Ausgehend von dieser Verbrennungskraftmaschine 25, in der das Abgas produziert wird, durchströmt das Abgas nunmehr diverse Abgasbehandlungseinheiten 15, wobei hier exemplarisch ein Gehäuse 13 mit zwei Wabenkörpern 10 veranschaulicht ist.

### Bezugszeichenliste

- 1: Öffnung
- 2: Metallfolie
- 3: Krümmung
- 4: Schleifscheibe
- 5: Schleifdraht
- 6: Vorschubbewegung
- 7: Struktur
- 8: Führung
- 9: Kante
- 10: Wabenkörper
- 11: Metallband
- 12: Stapel
- 13: Gehäuse
- 14: Vorsprung
- 15: Abgasbehandlungseinheit
- 16: Vlies
- 17: Drahtfilament
- 18: Kanal
- 19: Beschichtung
- 20: Strömungsumlenkung
- 21: Kanalquerschnitt
- 22: Kraftfahrzeug
- 23: Erhebung
- 24: Senke
- 25: Verbrennungskraftmaschine
- 26: Strömungsrichtung
- 27: Partikel
- 28: Weite
- 29: Dicke
- 30: Stirnseite
- 31: Relativbewegung
- 32: Bewegungsrichtung
- 33: Walze
- 34: Profilrad

## Patentansprüche

1. Verfahren zur Erzeugung von Öffnungen (1) in eine Metallfolie (2) umfassend zumindest die folgenden Schritte:
a) Bereitstellen einer ebenen Metallfolie (2),
b) Erzeugen mindestens einer Krümmung (3) in die Metallfolie (2),
c) Erzeugen zumindest einer Öffnung (1) im Bereich der mindestens einen Krümmung (3) mittels einem spanenden Fertigungsverfahren, bei dem ein abrasives Abtragen mittels einem der folgenden Werkzeuge mit undefinierter Schneide erfolgt:
- Schleifscheibe zu
- Schleifdraht (5):
wobei die Metallfolie (2) während dessen eine Vorschubbewegung (6) ausführt.

2. Verfahren nach Patentanspruch 1, bei dem Schritt b) das Erzeugen einer permanenten Struktur (7) mit einer Vielzahl von Krümmungen (3) umfasst.

3. Verfahren nach einem der vorhergehenden Patentansprüche, bei dem die Mittel zur Erzeugung der mindestens einen Krümmung (3) auch als Führung (8) der Metallfolie (2) während Schritt c) dienen.

4. Verfahren nach einem der vorhergehenden Patentansprüche, bei dem ein Schritt d) durchgeführt wird, bei dem wenigstens eine Kante (9) der zumindest einen Öffnung (1) geglättet wird.

5. Verfahren zur Herstellung eines Wabenkörpers (10) umfassend wenigstens eine gewellte Metallfolie (2) und ein flaches Metallband (11) mit zumindest folgenden Schritten:
A) Herstellen wenigstens einer gewellten Metallfolie (2) mit Öffnungen (1) nach einem der vorhergehenden Ansprüche;
B) Anordnen der wenigstens einen gewellten Metallfolie (2) mit wenigstens einem flachen Metallband (11) zu wenigstens einem Stapel (12);
C) Winden des wenigstens einen Stapels (12);
D) Einfügen des wenigstens einen Stapels (12) in ein Gehäuse (13);
E) Fügen zumindest von Metallfolie (2) und Metallband (11) miteinander oder zumindest von Metallfolie (2) oder Metallband (11) mit dem Gehäuse (13).

6. Verfahren nach Patentanspruch 5, bei dem vor Schritt B) bei dem wenigstens einen flachen Metallband (11) zumindest ein lokaler Vorsprung (14) erzeugt wird, der zumindest während Schritt B) mit wenigstens einer Öffnung (1) der wenigstens einen gewellten Metallfolie (2) zusammenwirkt.

## Claims

1. Method for generating openings (1) in a metal foil (2), comprising at least the following steps:
a) providing a planar metal foil (2),
b) generating at least one curve (3) in the metal foil (2),
c) generating at least one opening (1) in the region of the at least one curve (3) by means of a cutting production process, in which an abrasive removal is performed by means of one of the following tools with an undefined cutting edge:
- grinding disk (4),
- grinding wire (5), the metal foil (2) performing a feed movement (6) during said abrasive removal.

2. Method according to Patent Claim 1, in which step b) comprises the generation of a permanent structure (7) with a multiplicity of curves (3).

3. Method according to one of the preceding patent claims, in which the means for generating the at least one curve (3) also serve as a guide (8) for the metal foil (2) during step c).

4. Method according to one of the preceding patent claims, in which a step d) is carried out in which at least one edge (9) of the at least one opening (1) is smoothed.

5. Method for producing a honeycomb body (10) comprising at least one corrugated metal foil (2) and a flat metal strip (11), having at least the following steps:
A) producing at least one corrugated metal foil (2) with openings (1) according to one of the preceding claims;
B) arranging the at least one corrugated metal foil (2) with at least one flat metal strip (11) to form at least one stack (12);
C) winding the at least one stack (12);
D) inserting the at least one stack (12) into a housing (13);
E) joining at least the metal foil (2) and metal strip (11) to one another or at least the metal foil (2) or metal strip (11) to the housing (13).

6. Method according to Patent Claim 5, in which, before step B), at least one local projection (14) is generated in the at least one flat metal strip (11), which projection (14) interacts, at least during step B), with at least one opening (1) of the at least one corrugated metal foil (2).

## Revendications

1. Procédé pour faire des ouvertures (1) dans une feuille 2) métallique, comprenant au moins les stades suivants :
a) on se procure une feuille (2) métallique plane,
b) on fait au moins une courbure (3) dans la feuille (2) métallique,
c) on fait au moins une ouverture (1) dans la partie de la au moins une courbure (3) au moyen d'un procédé de fabrication avec enlèvement de copeaux,
dans lequel on effectue un enlèvement abrasif au moyen de l'un des outils suivants à tranchant indéfini .
- meule (4),
- fil (5) d'aiguisage,
tandis que la feuille (2) métallique exécute un mouvement (6) d'avance.

2. Procédé suivant la revendication 1, dans lequel le stade b) comprend la production d'une structure (7) permanente ayant une pluralité de courbures (3).

3. Procédé suivant l'une des revendications précédentes, dans lequel les moyens pour faire la au moins une courbure (3) servent aussi de guidage (8) de la feuille (2) métallique pendant le stade c).

4. Procédé suivant l'une des revendications précédentes, dans lequel on effectue un stade d), dans lequel on rend lisse au moins un bord (9) de la au moins une ouverture (1).

5. Procédé de fabrication d'un corps (10) en nid-d'abeilles, comprenant au moins une feuille (2) métallique ondulée et un feuillard (11) métallique plat, comprenant au moins les stades suivants :
A) fabrication d'au moins une feuille (2) métallique ondulée ayant des ouvertures (1) suivant l'une des revendications précédentes ;
B) mise de la au moins une feuille (2) métallique ondulée et d'au moins un feuillard (11) métallique plat en au moins une pile (12) ;
C) torsion de la au moins une pile (12) ;
D) insertion de la au moins une pile (12) dans une boîte (13) ;
E) jonction d'au moins la feuille (2) métallique et le feuillard (11) métallique entre eux ou d'au moins la feuille (2) métallique ou le feuillard (11) métallique à la boîte (13).

6. Procédé suivant la revendication 5, dans lequel, avant le stade B), on produit dans le au moins un feuillard (11) métallique plat au moins une saillie (14) locale, qui, au moins pendant le stade B), coopère avec au moins une ouverture (1) de la au moins une feuille (2) métallique ondulée.
